Europäisches Patentamt

European Patent Office

Office européen des brevets

(11) Publication number: **0 310 157 B1**

# EUROPEAN PATENT SPECIFICATION

(45) Date of publication of patent specification: **13.05.92**  (51) Int. Cl.5: **B62D 33/04**, B62D 25/02

(21) Application number: **88201864.1**

(22) Date of filing: **01.09.88**

(54) **Body for a commercial vehicle or the like.**

(30) Priority: **04.09.87 NL 8702101**

(43) Date of publication of application:
**05.04.89 Bulletin 89/14**

(45) Publication of the grant of the patent:
**13.05.92 Bulletin 92/20**

(84) Designated Contracting States:
**AT BE CH DE ES FR GB GR IT LI LU NL SE**

(56) References cited:
**WO-A-85/05337**
**CH-A- 420 556**
**DE-B- 1 269 906**
**GB-A- 1 604 804**
**US-A- 4 004 373**

(73) Proprietor: **VERENIGING VERENIGDE CAR-
ROSSERIEBOUWERS
Van IJssendijkstraat 162
NL-1442 LC Purmerend(NL)**

(72) Inventor: **Karhof, Joannes Gerardus
Zuiderpad 7
NL-1461 BV Z.O.Beemster(NL)**

(74) Representative: **de Vries, Johannes Hendrik
Fokke et al
Octrooibureau Los en Stigter B.V. P.O. Box
20052
NL-1000 HB Amsterdam(NL)**

## Description

The invention relates to a body for a commercial vehicle or the like according to the preamble of claim 1.

Such a body is disclosed in WO-A-85 05 337. This document describes only the mutual connection between adjacent walls and the connection between the walls and the sub-structure of the vehicle. The panels are held between the flanges of the bend and the clamping elements, and are glued to the same.

The invention aims to provide a body of the above-mentioned type wherein the complete body can be built of a small number of corresponding parts.

To this end the body according to the invention is characterized by the characterizing features of claim 1.

The invention will be further explained by reference to the drawings in which an embodiment of the body according to the invention is schematically shown.

Fig. 1a-1e shows different views of an embodiment of the body according to the invention.

Fig. 2 is a partially shown longitudinal section of the body of fig. 1 according to the line II-II.

Fig. 3 is a partially shown cross section of the body of fig. 1 according to the line III-III.

Fig. 4 is a partially shown horizontal section of the body of fig. 1 according to the line IV-IV.

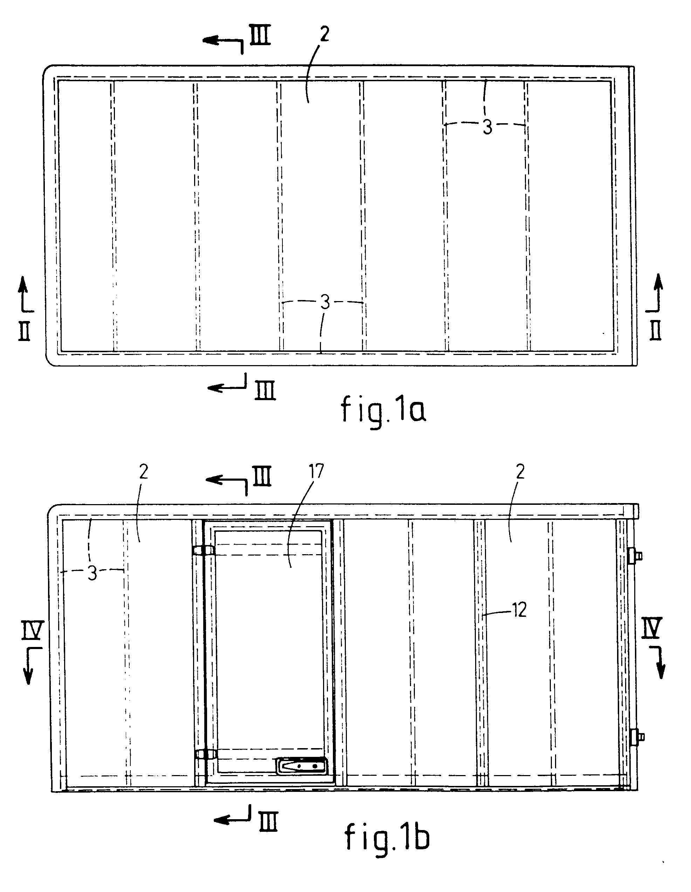

In fig. 1a-1e there is shown a body 1 in top view, side view right side, side view left side, front view and back view, respectively. The walls of the body are assembled of one or more flat panels 2 which are strengthened by tube sections 3, which in any case extend along the edges of the panel 2.

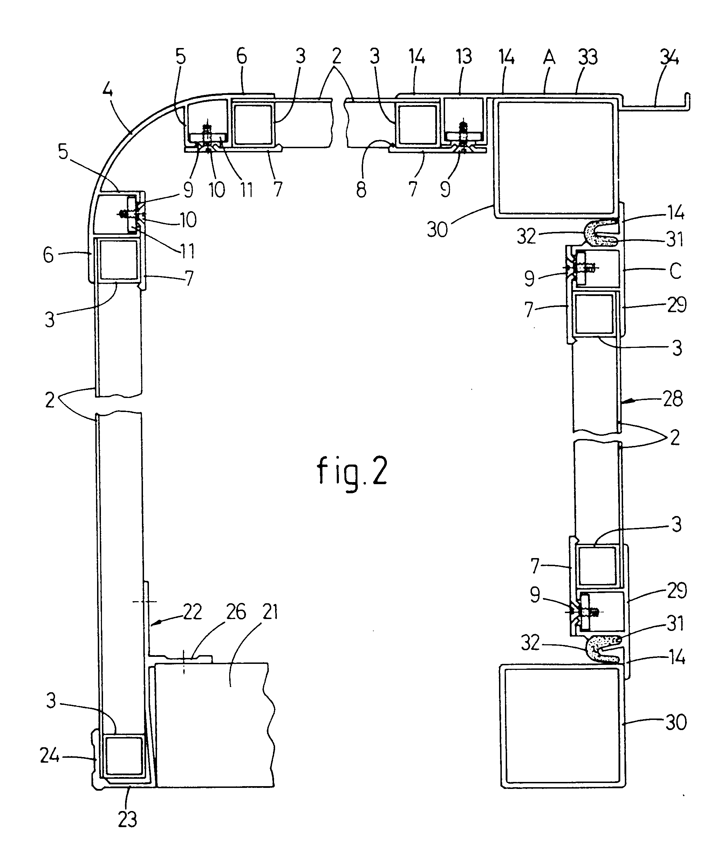

The panels 2 of adjacent walls join each other through bends 4 extending along 90°, which are shown in section in figs. 2-4. Each bend 4 at its both longitudinal edges is provided with an inwardly directed first coupling section 5 and with a free projecting flange 6 engaging the outer side of an adjacent panel 2. The connection between a panel 2 and a coupling section 5 is obtained by first clamping elements 7 distributed along the length of the bend 4 and attached to the inner side of the coupling section 5 and engaging with a locking lug 8 behind the tube section 3 lying at the edge of the corresponding panel 2. In order to obtain a very simple mounting of the clamping elements 7 on the coupling section 5, an open slot 9 is formed at the inner side in the coupling section. Each clamping element 7 having a width of for example 2,5 cm, is attached to the coupling section 5 by means of a bolt 10 and a nut 11. The nut 11 is made rectangular and can be inserted through the slot 9 of the coupling section 5 with its short rectangular side. By subsequently rotating the nut 11 a quarter turn, the clamping element 7 can be fixed with the bolt 10.

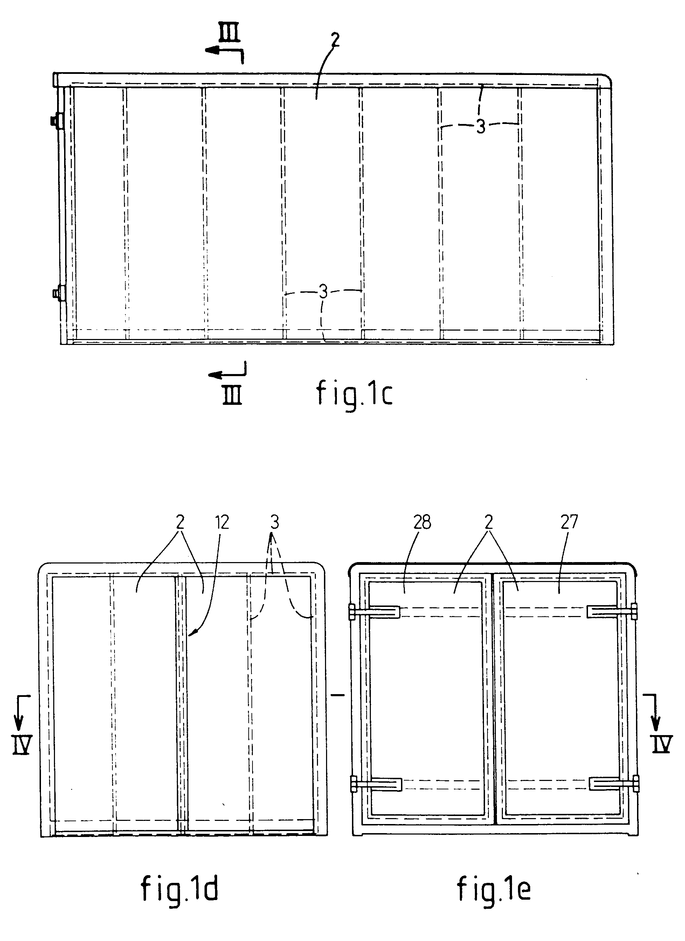

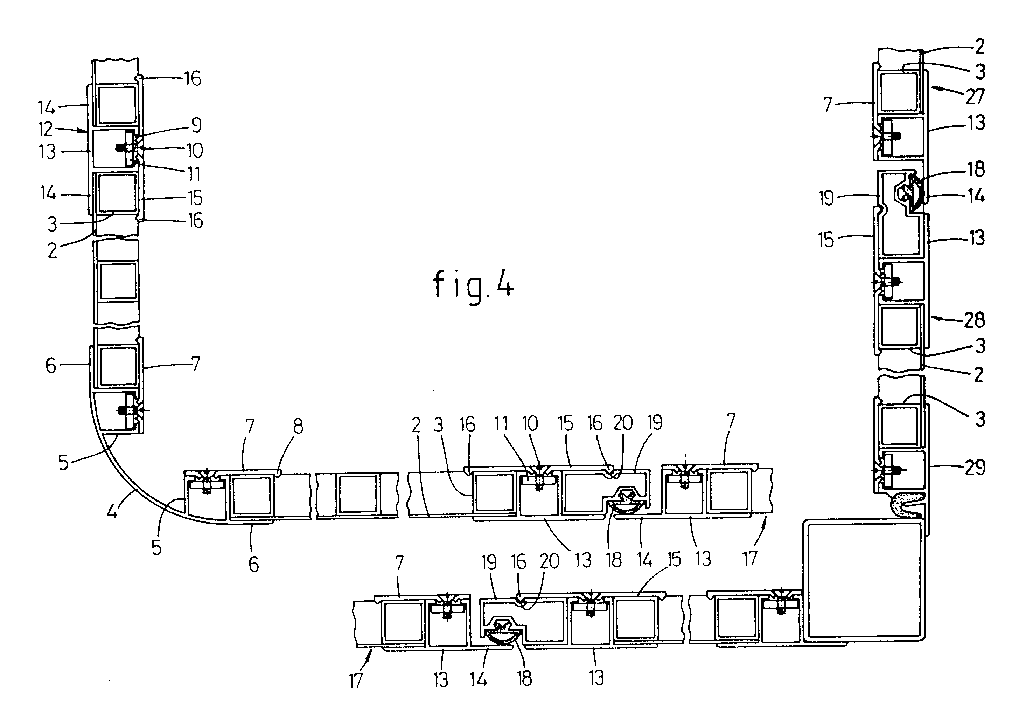

In the same manner two panels 2 strengthened with tube sections 3 of one wall can be interconnected as indicated in figs. 1 and 4 by 12. A second coupling section 13 is disposed between the adjacent panels 2, which coupling section on both sides has a flange 14 at the outer side engaging the outer side of the panels 2. The inner side of the coupling section 13 is provided with a slot 9 in the same manner as the coupling section 5. By means of this slot 9 second clamping elements 15 distributed along the length of the coupling section 13 are attached by means of bolts and nuts 10, 11. The clamping elements 15 engage with locking lugs 16 behind the tube sections 3 lying at the edge of the panels 2.

It is noted that the height of the coupling sections 5, 13 with respect to the flanges 6 and 14, respectively is of course such that the tube sections 3 of the panels 2 are fixedly clamped between the clamping elements 7 and 15, respectively, and the flanges 6 and 14, respectively.

The coupling sections 13 are advantageously also used for mounting a door 17 in a side wall of the body 1 as shown in figs. 1b, 3 and 4. The door 17 is also made of a panel 2 strengthened with tube sections 3 and provided with the coupling section 13 along its whole circumference. This coupling section 13 is fixed to the panel 2 by means of the first clamping elements 7. In the closed position of the door 17 shown in fig. 4, the freely projecting flange 14 of the coupling sections 13 cooperates with a rubber strip 18 for sealing the door opening.

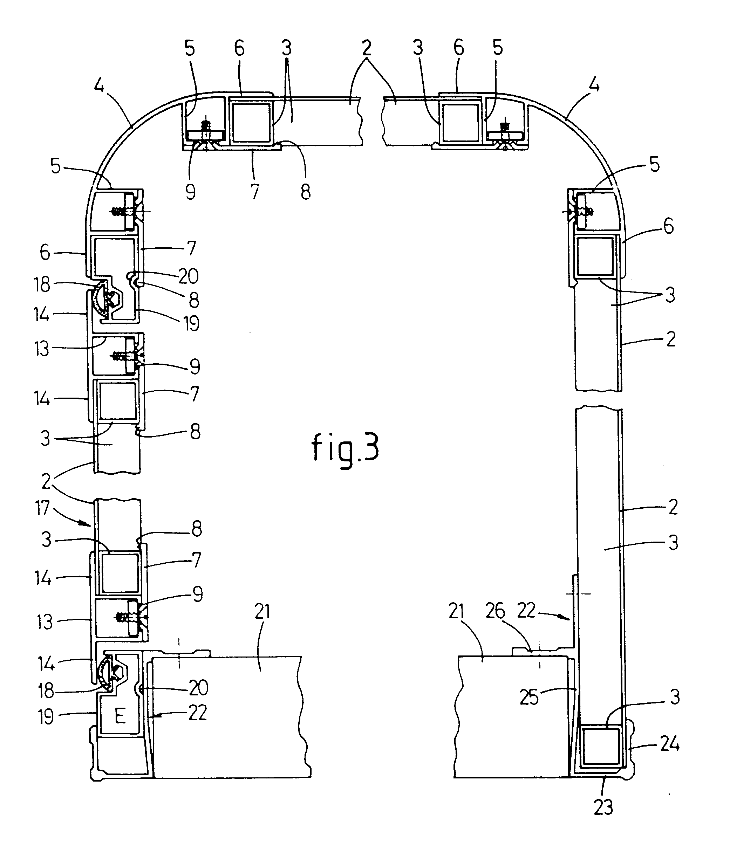

The rubber strip 18 is mounted in mounting sections 19. The upright mounting sections 19 shown in section in fig. 4 are connected with the panels 2 of the side wall by coupling sections 13, wherein the attachment is made by means of clamping elements 15. The locking lugs 16 of the clamping elements 15 at the side of the mounting section 19 engage in a recess 20. As appears from fig. 3, the mounting section 19 at the upper side of the door 17 is attached to the bend 4 through which the corresponding side wall joins the upper wall of the body 1. This attachment is made by clamping elements 7, the locking lugs 8 of which engage in the recess 20 of the mounting section 19.

The side walls and the front wall of the body 1 are mounted by means of a wall supporting section 22 on the substructure 21 only schematically shown of a commercial vehicle not further shown. This wall supporting section 22 has a mainly L-shaped section, wherein the short leg 23 supports at its free end an upright clamping strip 24 engaging the outer side of the pannel 2. The long leg 25 at a distance below the free end has a mounting edge 26 directed away of the short leg 23. The mounting edge 26 is fixed to the substructure 21 whereas the long leg 25 is connected with tube profiles 3 of the panels 2 as schematically indicated by dashed line. At the location of the door 17 the long leg 25 of the wall supporting section 22 is shortened upto the mounting edge 26. In this case the lower mounting section 19 is mounted in the wall supporting section 22.

The back wall of the described body 1 consists of two load doors 27, 28, each made of a panel 2 strengthened with tube sections 3. The sides of the doors 27, 28 directed towards each other are provided with the second coupling section 13. At the door 27 the coupling section 13 is attached by means of first clamping elements 7. At the door 28 the coupling section 13 carries a mounting section 19 with rubber strip 18, wherein the attachment of this unit is made by second clamping elements 15. The free flange 14 of the coupling section 13 of the door 27 in this case cooperates with the rubber strip 18 in the closed position of the doors 27, 28.

Along the remaining sides of the doors 27, 28 third coupling sections 29 are attached by means of first clamping elements 7. The third coupling sections 29 mainly corresponds with the second coupling sections 13 and are provided with an open slot 9 at their inner side. The freely projecting flange 14 of the coupling sections 29 operates here as a stop edge cooperating with a frame 30 of the door opening which consists of tube beams. At the side of this freely projecting flange the coupling section 29 is provided with a mounting slot 31 in which a rubber strip 32 is mounted.

It is noted that the doors 17, 27 and 28 are mounted by means of hinges in a usual manner. Further usual door closures are provided. These parts do not form part of the invention and are not further described.

The connection of the panel 2 of the upper wall with the frame 30 of the doors 27, 28 could be made by means of the second coupling section 13 attached to the panel 2 by means of first clamping elements 7. The flange 14 directed away from the panel 2 can then be attached to the frame 30 in any desired manner. However at the body 1 shown the flange 14 is provided with an extension 33 which projects with a recessed portion 34 beyond the frame 30, which portion functions as a rain gutter.

From the foregoing it will be clear that the invention provides a body which can be manufactured in many different embodiments with a relatively low number of parts. The connections between the various panels of which the body is made, can be made in a simple manner wherein it is not necessary to make bore-holes. Thereby the body according to the invention can be build in a relatively short time.

## Claims

1. Body for a commercial vehicle or the like, the walls of which include one or more flat panels (2), wherein at least one door (17, 27, 28) is provided in one or more walls, and wherein the panels (2) of adjacent walls are joined to each other through a bend (4) extending along 90°, wherein each bend on both its longitudinal edges is provided with an inwardly directed first coupling section (5) and a freely projecting flange (6) engaging the outer side of the adjacent panel (2), the panels (2) being connected with a bend (4) by first clamping elements (7) distributed along the length of the bend, which clamping elements (7) are attached to the inner side of the coupling sections (5), characterized in that the adjacent panels (2) of a wall are connected to each other by a second coupling section (13) with a flange (14) on both sides engaging the outer side of the panels (2), wherein second clamping elements (15) are attached to the inner side of the second coupling section (13) distributed along its length, each of the panels being strengthened by tube sections (3) extending at least along the edges thereof, wherein the first and second clamping elements (7, 15) are provided with locking lugs (8, 16) engaging behind the edge tube sections (3) of the respective adjacent panels (2) and in that a door (17) in a side wall is made of a panel (2) strengthened with tube sections (3), which panel along its whole periphery is provided with the second coupling section (13) attached to this panel (2) by first clamping elements (7), the freely projecting flange (14) of this second coupling section (13) being adapted to cooperate with a rubber strip (18) mounted in the door opening by mounting sections (19), wherein the upright mounting sections are connected to the adjoining panels (2) by means of the second coupling section (13) and second clamping elements (15), and the upper mounting section by means of first clamping elements (7) is connected with the adjacent first coupling section (5) of the bend (4) joining the upper wall.

2. Body according to claim 1, wherein two doors are provided at the back side, characterized in that each door (27, 28) is made of a panel (2) strengthened by tube sections (3), wherein the sides of the doors directed towards each other are provided with the second coupling section (13) which at the one door (27) is attached by first clamping elements (7), whereas at the other door a mounting section (19) with rubber strip (18) is further provided and the attachment has been made by second clamping elements (15), wherein along the remaining sides of the doors (27, 28) third coupling sections (29) are attached by means of first clamping elements (7), which third coupling section (29) has a flange (14) at both sides, which flange at the one side engages the outer side of the door panel (2) and at the other side operates as stop edge, wherein at the side of the stop edge the coupling section (29) has a mounting slot (31), in which a rubber sealing strip (32) is mounted.

3. Body according to claim 1 or 2, characterized in that the side walls and the front wall are mounted on the substructure (21) of the corresponding commercial vehicle or the like by means of a wall supporting section (22) having a L-shaped cross section, wherein the short leg (23) at its free end supports an upright clamping strip (24) engaging the outer side of the panel (2) and the long leg (25) has at a distance below its free end a mounting edge (26) directed away from the short leg (23).

4. Body according to claim 3, characterized in that at the location of the door opening the long leg (25) is shortened upto the mounting edge (26) and the mounting section (19) for the rubber strip (18) is attached in the wall supporting section (22).

5. Body according to anyone of the preceding claims, characterized in that the upper wall at the back side is connected with the back wall by means of the second coupling section (13), wherein first clamping elements (7) connect the second coupling section (13) with the panel (2) of the upper wall.

6. Body according to claim 5, characterized in that the coupling section (13) connecting the upper wall with the back wall is provided with a freely projecting extension (33) operating as rain gutter (34).

7. Body according to anyone of the preceding claims, characterized in that each coupling section (5, 13, 29) at its inner side has an open slot (9), wherein the connection between each clamping element (7, 15) and each coupling section (5, 13, 29) is obtain by means of a bolt (10) and nut (11) connection, wherein the nut (11) is rectangular and can be brought into the coupling section through the slot (9) with its short side.

## Revendications

1. Carrosserie pour un véhicule utilitaire ou autre, dont les parois comprennent un ou plusieurs panneaux plats (2), dans laquelle au moins une porte (17, 27, 28) est prévue dans une ou plusieurs parois, et dans laquelle les panneaux (2) de parois adjacentes sont joints entre eux par un coude (4) s'étendant sur 90°, dans laquelle chaque coude est pourvu, sur ses deux bords longitudinaux, d'un premier profilé (5) d'accouplement dirigé vers l'intérieur et d'un rebord (6) faisant saillie librement, portant contre la face extérieure du panneau adjacent (2), les panneaux (2) étant reliés au moyen d'un coude (4) par des premiers éléments de bridage (7) répartis sur la longueur du coude, lesquels éléments de bridage (7) sont fixés au côté intérieur des profilés (5) d'accouplement, caractérisée en ce que les panneaux adjacents (2) d'une paroi sont reliés entre eux par un deuxième profilé (13) d'accouplement ayant un rebord (14) sur les deux côtés, portant contre la face extérieure des panneaux (2), dans laquelle des deuxièmes éléments de bridage (15) sont fixés au côté intérieur du deuxième profilé d'accouplement (13), distribués sur sa longueur, chacun des panneaux étant renforcé par des profilés tubulaires (3) s'étendant au moins le long de ses bords, dans laquelle les premiers et deuxièmes éléments de bridage (7, 15) sont pourvus de mentonnets (8, 16) de verrouillage s'engageant en arrière des profilés tubulaires (3) des bords des panneaux adjacents respectifs (2) et en ce qu'une porte (17) dans une paroi latérale est formée d'un panneau (2) renforcé par des profilés tubulaires (3), lequel panneau est pourvu, sur toute sa périphérie, du deuxième profilé (13) d'accouplement fixé à ce panneau (2) par des premiers éléments (7) de bridage, le rebord (14) faisant saillie librement de ce deuxième profilé (13) d'accouplement étant destiné à coopérer avec une bande (18) de caoutchouc montée dans l'ouverture de la porte au moyen de profilés (19) de montage, dans laquelle les profilés verticaux de montage sont reliés aux panneaux contigus (2) au moyen du second profilé (13) d'accouplement et des deuxièmes éléments de bridage (15), et le profilé supérieur de montage au moyen des premiers éléments de bridage (7) est relié au premier profilé adjacent (5) d'accouplement du coude (4) joignant la paroi supérieure.

**2.** Carrosserie selon la revendication 1, dans laquelle deux portes sont prévues au côté arrière, caractérisée en ce que chaque porte (27, 28) est formée d'un panneau (2) renforcé par des profilés tubulaires (3), dans laquelle les côtés des portes dirigés l'un vers l'autre sont pourvus du deuxième profilé (13) d'accouplement qui, à la première porte (27), est fixé par des premiers éléments de bridage (7), alors qu'à l'autre porte, un profilé (19) de montage pourvu d'une bande (18) de caoutchouc est en outre prévu et la fixation a été réalisée par des deuxièmes éléments de bridage (15), dans laquelle, le long des autres côtés des portes (27, 28), des troisièmes profilés (29) d'accouplement sont fixés au moyen de premiers éléments (7) de bridage, lequel troisième profilé (29) d'accouplement comporte une aile (14) sur ses deux côtés, laquelle aile, sur le premier côté, porte contre la face extérieure du panneau (2) de porte et agit, sur l'autre côté, à la manière d'un bord d'arrêt le profilé (29) d'accouplement présentant, sur le côté du bord d'arrêt, une rainure (31) de montage dans laquelle une bande d'étanchéité (32) en caoutchouc est montée.

**3.** Carrosserie selon la revendication 1 ou 2, caractérisée en ce que les parois latérales et la paroi avant sont montées sur le châssis (21) du véhicule utilitaire correspondant ou autre au moyen d'un profil (22) de support de paroi ayant une section transversale de forme en L, dans laquelle l'aile courte (23) supporte, à son extrémité libre, une bande verticale (24) de bridage portant contre la face extérieure du panneau (2) et l'aile longue (25) présente, à une certaine distance au-dessous de son extrémité libre, un bord (26) de montage tourné à l'écart de l'aile courte (23).

**4.** Carrosserie selon la revendication 3, caractérisée en ce que, à l'emplacement de l'ouverture de porte, l'aile longue (25) est raccourcie jusqu'au bord (26) de montage et le profilé (19) de montage pour la bande (18) de caoutchouc est fixé dans le profilé (22) de support de paroi.

**5.** Carrosserie selon l'une quelconque des revendications précédentes, caractérisée en ce que la paroi supérieure, sur le côté arrière, est reliée à la paroi arrière au moyen du deuxième profilé (13) d'accouplement, dans laquelle des premiers éléments (7) de bridage relient le deuxième profilé (13) d'accouplement au panneau (2) de la paroi supérieure.

**6.** Carrosserie selon la revendication 5, caractérisée en ce que le profilé (13) d'accouplement reliant la paroi supérieure à la paroi arrière est pourvu d'un prolongement (33) faisant saillie librement, se comportant à la manière d'une gouttière (34) d'eau de pluie.

**7.** Carrosserie selon l'une quelconque des revendications précédentes, caractérisée en ce que chaque profilé (5, 13, 29) d'accouplement présente, à son côté intérieur, une fente ouverte (9), dans laquelle la liaison entre chaque élément de bridage (7, 15) et chaque profilé (5, 13, 29) d'accouplement est réalisée au moyen d'une liaison à vis (10) et écrou (11), l'écrou (11) étant rectangulaire et pouvant être introduit dans le profil d'accouplement à travers la fente (9) par son petit côté.

**Patentansprüche**

**1.** Aufbau für ein Nutzfahrzeug oder dergleichen, dessen Wände ein oder mehrere flache Panele (2) aufweisen, wobei wenigstens eine Tür (17,27,28) in einer oder mehreren Wänden vorgesehen ist, und wobei die Panele (2) von benachbarten Wänden mittels eines Bogens (4) der sich um 90° erstreckt, miteinander verbunden sind, wobei jeder Bogen auf beiden seiner Längskanten mit einem nach innen gerichteten ersten Kupplungsabschnitt (5) und einem frei vorstehenden Flansch (6) versehen ist, welcher die Aussenseite des benachbarten Panels (2) beaufschlagt, wobei die Panele (2) mit einem Bogen (4) verbunden sind mittels ersten Klemmelementen (7), welche entlang der Länge des Bogens verteilt sind, welche Klemmelemente (7) auf der Innenseite der Kupplungsabschnitte (5) angebracht sind, dadurch gekennzeichnet, dass die benachbarten Panele (2) einer Wand mittels eines zweiten Kupplungsabschnittes (13) verbunden sind, welche Abschnitte auf beiden Seiten einen Flansch (14) aufweisen, welcher die Aussenseite der Panele (2) beaufschlagen, wobei zweite Klemmelemente (15) auf der Innenseite der zweiten Kupplungsabschnitte (13) angebracht und entlang seiner Länge verteilt sind, jedes Panel ist mit Rohrabschnitten (3) verstärkt, welches sich wenigstens entlang der Kanten davon erstrecken, wobei die ersten und zweiten Klemmelemente (7,15) mit Verbindungsnocken (8,16) versehen sind, welche hinter die Kanten der Rohrabschnitte (3) der entsprechenden benachbarten Panele (2) greifen und wobei eine Tür (17) in einer Seitenwand aus einem Panel (2) hergestellt ist, welches mit Rohrabschnitten (3) verstärkt ist, welches Panel entlang seines ganzen Umfanges mit einem zweiten Kupplungsabschnittes (13) versehen ist, der mittels ersten Klemmelementen (7) an diesem Panel (2) angebracht ist, wobei der frei abstehende Flansch (14) dieses zweiten Kupplungsabschnittes (13) so ausgebildet ist, dass er mit einem Gummistreifen (18) zusammenarbeitet, welcher in der Türöffnung mit Montageabschnitten (19) montiert ist, wobei die stehenden Montageabschnitte mit den benachbarten Panelen (2) mittels des zweiten Kupplungsabschnittes (13) und zweiten Klemmelementen (15) verbunden sind, und der obere Montageabschnitt mittels ersten Klemmelementen (7) mit den benachbarten ersten Kupplungsabschnitt (5) des Bogens (4), welcher sich zur oberen Wand erstreckt, verbunden ist.

2. Aufbau nach Anspruch 1, wobei auf der Rückseite zwei Türen angeordnet sind, dadurch gekennzeichnet, dass jede Tür (27,28) aus einem Panel (2) hergestellt ist, welches durch Rohrabschnitte (3) verstärkt ist, wobei die einander gegenüberliegenden Seiten der Türen mit einem zweiten Kupplungsabschnitt (13) versehen sind, welche bei der einen Tür (27) mit ersten Klemmelementen (7) angebracht ist, wobei bei der anderen Tür ein Montagebereich (19) mit einem Gummistreifen (18) versehen ist und die Befestigung mit zweiten Klemmelementen (15) erfolgt ist, wobei entlang der übrigen Seiten der Türen (27,28) dritte Kupplungsabschnitte (29) mittels ersten Klemmelementen (7) angebracht sind, welcher dritter Kupplungsabschnitt (29) einen Flansch (14) an beiden Seiten aufweist, welcher Flansch auf der einen Seite die Aussenseite des Türpanels (2) beaufschlagt und auf der anderen Seite als Stoppkante dient, wobei auf der Seite der Stoppkante der Kupplungsabschnitt (29) einen Montageschlitz (31) aufweist, in welchen ein Gummidichtungsstreifen (32) eingesetzt ist.

3. Aufbau nach Anspruch 1 oder 2, dadurch gekennzeichnet, dass die Seitenwände und die Frontwand auf dem Unterbau (21) des entsprechenden Nutzfahrzeuges oder dergleichen mittels eines Wandstützbereichs (22) montiert sind, welcher Bereich einen L-förmigen Querschnitt aufweist, wobei das kurze Bein (23) an seinem freien Ende einen stehenden Klemmstreifen (24) trägt, welcher auf der Aussenseite des Panels (2) anliegt und das lange Bein (25) im Abstand unterhalb seines freien Endes eine Montagekante (26) aufweist, welche vom kurzen Bein (23) weggerichtet ist.

4. Aufbau nach Anspruch 3, dadurch gekennzeichnet, dass im Bereich der Türöffnung das lange Bein (25) bis zur Montagekante (26) gekürzt ist und der Montageabschnitt (19) für den Gummistreifen (18) im Wandstützabschnitt (22) angebracht ist.

5. Aufbau nach einem der vorhergehenden Ansprüche, dadurch gekennzeichnet, dass die obere Wand auf der Rückseite mittels des zweiten Kupplungsabschnittes (13) mit der Rückwand verbunden ist, wobei erste Klemmelemente (7) den zweiten Kupplungsabschnitt (13) mit dem Panel (2) der oberen Wand verbinden.

6. Aufbau nach Anspruch 5, dadurch gekennzeichnet, dass der Kupplungsabschnitt (13) welcher die obere Wand mit der Rückwand verbunden, mit einer frei vorstehenden Verlängerung (13) versehen ist, welche als Regenwasserabfluss (34) dient.

7. Aufbau nach einem der vorhergehenden Ansprüche, dadurch gekennzeichnet, dass jeder Kupplungsabschnitt (5,13,29) auf seiner Innenseite einen offenen Schlitz (9) aufweist, wobei die Verbindung zwischen jedem Klemmelement (7,15) und jedem Kupplungsabschnitt (5,13,29) mittels eines Bolzens (10) und Nut (11) verbunden ist, wobei die Nut (11) rechteckig ist und in den Kupplungsabschnitt durch den Schlitz (9) mit seiner schmaleren Seite eingesetzt werden kann.

fig.1a

fig.1b

fig.1c

fig.1d

fig.1e

fig.2

EP 0 310 157 B1

fig.3

10

fig.4